# EUROPEAN PATENT SPECIFICATION

(11) **EP 4 646 619 B1**
(45) Date of publication and mention of the grant of the patent: **25.03.2026**
(21) Application number: 24740516.0
(22) Date of filing: 28.06.2024
(51) Int. Cl.: G02B 1/04

(54) **STABILIZED FORMULATIONS FOR CONTACT LENSES**
STABILISIERTE FORMULIERUNGEN FÜR KONTAKTLINSEN
FORMULATIONS STABILISÉES POUR LENTILLES DE CONTACT

(30) Priority: 30.06.2023 GB 202310008
(43) Date of publication of application: 12.11.2025
(73) Proprietor: CooperVision International Limited, Fareham PO15 5RL (GB)
(72) Inventor: GIBSON, Ian, Eastleigh Hampshire SO53 4LY (GB); MITCHELL, William, Eastleigh Hampshire SO53 4LY (GB); MORSLEY, David, Eastleigh Hampshire SO53 4LY (GB); PISKORCZYK, Katarzyna, Eastleigh Hampshire SO53 4LY (GB); SIMPSON, Laura, Eastleigh Hampshire SO53 4LY (GB)
(74) Representative: Abel & Imray LLP
(86) International application number: PCT/GB2024/051684
(87) International publication number: WO 2025/003698

(56) References cited:
- GB-A- 2 623 152
- US-A1- 2012 216 489
- US-A1- 2014 018 465

## Description

The present invention relates to silicone hydrogel contact lens formulations comprising triphenylphosphine and silicone hydrogel contact lenses manufactured from such formulations. In particular, the present invention relates to the use of coloured tints and/or radiation blockers to improve the stability of such silicone hydrogel contact lens formulations.

### BACKGROUND

Formulated contact lens monomer mixtures are required to have sufficient stability to polymerisation ("pot-life") to allow them to be stored before use and to minimise gelation arising from premature polymerization when in use during lens manufacture.

Trace amounts of inhibitors, such as hydroquinones, are typically incorporated in commercially available monomers by the monomer manufacturer to inhibit polymerization as described in U.S. Publ. no. 2014/0330053 A1. These inhibitors function when oxygen is present, so are facilitated by having an air headspace in containers in which monomers and formulations containing monomers are stored.

Triphenylphosphine (TPP) can be added to formulated mixtures to act as an oxygen scavenger. This can give improved finished lens properties, but also stops the hydroquinone inhibitors working and can lead to premature polymerisation of the bulk liquid monomer mixtures, i.e. poor pot-life.

Therefore, there is a need for contact lens formulations, especially silicone hydrogel contact lens formulations, that contain TPP, that are more stable in their prepolymerized form. US 2012/216489 A1 discloses in Table 1, Formulation 1, a silicone hydrogel contact lens formulation comprising 35% (wt/wt) of a polymerizable siloxane component (Si1 and Si2), more than 40% (wt/wt) N-vinyl acetamide (VMA), and triphenylphosphine (TPP).

### SUMMARY OF THE INVENTION

It has been found that the addition of TPP into silicone hydrogel contact lens formulations that include high levels of polymerizable siloxanes can improve the processability of the formulations and reduce the level of lens defects that are introduced during cast molding processes. Thus, TPP has the potential to serve as a processing aid for contact lens formulations that include high levels of siloxanes. However, it has also been found that contact lens formulations comprising substantial levels of hydrophilic N-vinyl amide monomer(s) in combination with polymerizable siloxanes are particularly susceptible to premature polymerization when TPP is present. An aim of the present invention is to increase the stability of contact lens formulations comprising at least 40% (wt/wt) of a polymerizable siloxane component, at least 30% (wt/wt) hydrophilic N-vinyl amide monomer(s) and triphenylphosphine (TPP).

In a first aspect, the present invention provides a silicone hydrogel contact lens formulation, comprising:
a. at least 40% (wt/wt) of a polymerizable siloxane component;
b. at least 30% (wt/wt) of hydrophilic N-vinyl amide monomer(s);
c. triphenylphosphine (TPP);
d. 1,4-bis[(2-methacryloxyethyl)amino]-9,10-anthraquinone (RB247); and
e. optionally a benzophenone UV-absorbing agent and/or a benzotriazole HEVL absorber.

It has been found that by including the tinting agent RB247 in contact lens formulations comprising (a.) at least 40% (wt/wt) of a polymerizable siloxane component, (b.) at least 30% (wt/wt) of hydrophilic N-vinyl amide monomer(s) and (c.) TPP it is possible to obtain a contact lens formulation which is more stable in its pre-polymerised form and less susceptible to gelation than similar compositions that lack RB247 and/or which include other colorants. Benzophenone UV-absorbing agents, such as UV416, and benzotriazole HEVL absorbers, especially UV13 or UV28, have also been found to enhance the stability of contact lens formulations comprising (a.) at least 40% (wt/wt) of a polymerizable siloxane component, (b.) at least 30% (wt/wt) of hydrophilic N-vinyl amide monomer(s) and (c.) TPP. The benzophenone UV-absorbing agent, such as UV416, and benzotriazole HEVL absorber, such as UV13 or UV28, are each effective in stabilising contact lens formulations comprising (a.) at least 40% (wt/wt) of a polymerizable siloxane component, (b.) at least 30% (wt/wt) of hydrophilic N-vinyl amide monomer(s) and (c.) TPP on their own and when used in combination with the tinting agent RB247. When two or more of RB247, a benzophenone UV-absorbing agent and a benzotriazole HEVL absorber are used in combination, it has been found that there is a synergistic effect on enhancing the stability of contact lens formulations comprising (a.) at least 40% (wt/wt) of a polymerizable siloxane component, (b.) at least 30% (wt/wt) of hydrophilic N-vinyl amide monomer(s) and (c.) TPP. Thus, the formulations of the first aspect of the invention advantageously additionally comprise a benzophenone UV-absorbing agent and/or a benzotriazole HEVL absorber, especially both a benzophenone UV-absorbing agent and a benzotriazole HEVL absorber, in addition to RB247.

As benzophenone UV-absorbing agents and benzotriazole HEVL absorbers have both been found to have a positive effect on the stability of formulations comprising (a.) at least 40% (wt/wt) of a polymerizable siloxane component, (b.) at least 30% (wt/wt) of hydrophilic N-vinyl amide monomer(s) and (c.) TPP in the absence of RB247, the invention also provides for formulations that include a benzophenone UV-absorbing agent and/or a benzotriazole HEVL absorber in the absence of RB247. Thus, in a second aspect, the invention provides a contact lens formulations comprising:
a. at least 40% (wt/wt) of a polymerizable siloxane component;
b. at least 30% (wt/wt) of hydrophilic N-vinyl amide monomer(s);
c. triphenylphosphine (TPP);
d. optionally 1,4-bis[(2-methacryloxyethyl)amino]-9,10-anthraquinone (RB247); and
e. a benzophenone UV-absorbing agent and/or a benzotriazole HEVL absorber.

Formulations of the second aspect of the invention advantageously comprise both a benzophenone UV-absorbing agent, such as UV416, and a benzotriazole HEVL absorber, such as UV13 or UV28.

In addition to the components listed above, the silicone hydrogel contact lens formulations of the invention typically contain further polymerizable monomers, oligomers and/or pre-polymers, one or more crosslinkers and one or more polymerization initiators.

In a third aspect, the invention provides a silicone hydrogel contact lens, formed from the polymerisation of the formulation of the first aspect of the invention. Thus, the polymeric lens material of the silicone hydrogel contact lens of the third aspect of the invention comprises the polymeric product of polymerising a composition comprising:
a. at least 40% (wt/wt) of a polymerizable siloxane component;
b. at least 30% (wt/wt) of hydrophilic N-vinyl amide monomer(s);
c. triphenylphosphine (TPP);
d. 1,4-bis[(2-methacryloxyethyl)amino]-9,10-anthraquinone (RB247); and
e. optionally a benzophenone UV-absorbing agent and/or a benzotriazole HEVL absorber.

In a fourth aspect, the invention provides a silicone hydrogel contact lens, formed from the polymerisation of the formulation of the second aspect of the invention. Thus the polymeric lens material of the silicone hydrogel contact lens of the fourth aspect of the invention comprises the polymeric product of polymerising a composition comprising:
a. at least 40% (wt/wt) of a polymerizable siloxane component;
b. at least 30% (wt/wt) of hydrophilic N-vinyl amide monomer(s);
c. triphenylphosphine (TPP);
d. optionally 1,4-bis.[(2-methacryloxyethyl)amino]-9,10-anthraquinone (RB247); and
e. a benzophenone UV-absorbing agent and/or a benzotriazole HEVL absorber.

In a fifth aspect the invention provides the use of an anthraquinone blue tinting agent, a benzophenone UV-absorbing agent and/or a benzotriazole HEVL absorber to stabilise a formulation comprising:
a. at least 40% (wt/wt) of a polymerizable siloxane component;
b. at least 30% (wt/wt) of hydrophilic N-vinyl amide monomer(s); and
c. triphenylphosphine (TPP).

Formulations of the invention have been found to be stable to pre-polymerisation gelation for upwards of 1 day, and avoid complete gelation (forming a solid gel) for upwards of 3 days. In comparison, similar formulations containing TPP can show gelation within 1 day, and form a solid gel within 3 days, sometimes within 2 days, or as little as 1 day.

### DETAILED DESCRIPTION

The present disclosure will be more fully understood and further advantages will become apparent when reference is made to the following detailed description of embodiments of the present disclosure. The invention will be described in further detail with particular reference to the formulations of the first and second aspects of the invention, hereinafter referred to as "formulations of the invention". However, it is to be understood that as the contact lenses of the third or fourths aspects of the invention are obtainable from polymerising the formulations of the first and second aspects of the invention, hereinafter referred to as "contact lenses of the invention" and constituents of the formulations of the first and second aspect of the invention will, therefore, be present in polymerised form in the polymeric lens material of the contact lenses of the invention. Likewise, contact lenses that have been found to particularly benefit from the use of TPP to improve the surface properties in accordance with the fifth aspect of the invention, are those having the characteristics described herein for lenses of the third and fourth aspects of the invention and/or those obtained from polymerization of formulations having the characteristics described herein for formulations of the first and second aspects of the invention. Thus, constituents of the formulations of the first and second aspects of the invention will be present in polymerized form in the polymeric lens material of the contact lenses in which TPP is used in accordance with the fifth aspect of the invention. Features of the formulations or lenses, or components thereof, or features of the use of an anthraquinone tinting agent, a benzophenone UV-absorbing agent and/or a benzotriazole HEVL absorber (depending on context) that are referred to herein can be combined with any combination of previously-described or subsequently-described features, unless a particular combination of features is mutually exclusive, or if context indicates otherwise. Further, as used in this specification, the singular forms "a," "an," and "the" include plural referents (e.g. at least one or more) unless the context clearly dictates otherwise. Thus, for example, reference to "a contact lens" includes a single lens as well as two or more of the same or different lenses.

The present disclosure is based on the discovery that it is possible to provide contact lenses having improved finished lens properties from formulations comprising TPP that have good pot-life due to a reduction in the premature polymerisation of the formulation, by including one or more of a anthraquinone tinting agent, a benzophenone UV-absorbing agent and a benzotriazole HEVL absorber in the polymerizable formulation from which the contact lens is produced. Other combinations of formulations comprising TPP with different tints and/or UV absorbing agents have been found to have an inferior pot-life and have been found to be susceptible to premature polymerization. Contact lens formulations comprising at least 40% (wt/wt) of a polymerizable siloxane component, at least 30% (wt/wt) of hydrophilic N-vinyl amide monomer(s) and TPP have been found to be particularly susceptible to premature polymerisation. Including anthraquinone tinting agents and/or a benzophenone UV-absorbing agent and/or a benzotriazole HEVL absorber in such formulations has been found to be effective in preventing or reducing premature polymerisation. The polymerizable constituents of the formulations of the invention are typically incorporated into the contact lens of the invention.

References herein to an amount of an ingredient or component present in a formulation expressed in terms of weight percent (i.e. % (wt/wt)) are based on the amount of all formulation ingredients excluding diluents and/or solvents that are not incorporated into the polymeric lens material of the finished contact lens. Thus, for example, the amount of TPP in a formulation made by mixing together 0.5 parts TPP, 40 parts siloxane component, 30 parts of hydrophilic N-vinyl amide monomers, 4.5 parts of other active ingredients (e.g. polymerization initiator, tinting agent, oxygen scavenger, etc.) and 25 parts organic solvent and/or water (for a total of 100 parts) is 0.67% (wt/wt). As used herein a "component" of a formulation refers collectively to all ingredients of a particular type. For example, if a formulation comprises 20% (wt/wt) of a first siloxane monomer and 25% of a second siloxane monomer and no other siloxanes, the formulation can be described as comprising 45% (wt/wt) of a siloxane component.

The polymerizable formulations of the present invention include triphenylphosphine (TPP; CAS #: 603-35-0).

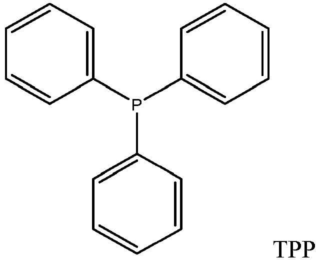

The TPP can be present in the polymerizable formulations of the invention, for example in the formulations of the first aspect of the invention, in an amount of at least 0.10% (wt/wt), typically in an amount of at least 0.15% (wt/wt), such as at least 0.20%, especially at least 0.25%. For example, TPP can be present in the polymerizable formulation in an amount from about 0.15% (wt/wt) to about 2.0% (wt/wt), such as from 0.20% (wt/wt) to 1.0% (wt/wt), typically in an amount from about 0.25% (wt/wt) to about 1% (wt/wt).

The polymerizable formulations of the first aspect of the present invention also include 1,4-bis[(2-methacryloxyethyl)amino]-9,10-anthraquinone (Reactive Blue 247, RB247; CAS # 109561-07-1; available from Arran Chemical Company of Co. Roscommon, Ireland and also from Pharnorcia Inc. of Edison, New Jersey, USA), referred to herein as "RB247".

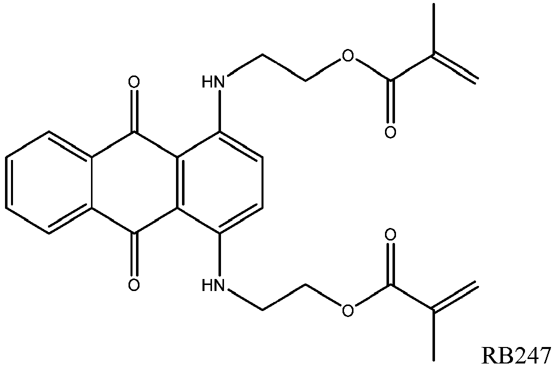

The RB247 can be present in the formulations of the invention in an amount of at least 0.003% (wt/wt), typically in an amount from about 0.005% (wt/wt) to 0.1% (wt/wt), such as from 0.006% (wt/wt) to 0.05% (wt/wt), or from 0.007% (wt/wt) to 0.03% (wt/wt).

It is known to include anthraquinone tinting agents in contact lens formulations as a tinting agent to colour the resulting contact lens, for example to facilitate handling of the lens by making it more visible, to impart an attractive blue tint to a lens and/or to counter an unattractive yellow colouration. However, the present inventors have surprisingly found that anthraquinone tinting agents, especially anthraquinone blue tinting agents may also function to inhibit pre-polymerisation gelation of lens formulations that include TPP, especially lens formulations that include TPP together with at least 40% (wt/wt) of a polymerizable siloxane component and at least 30% (wt/wt) of hydrophilic N-vinyl amide monomer(s).

The formulations of the invention may further comprise 1,4-bis[4-(2-methacryloxyethyl) phenylamino]-9,10-anthraquinone (CAS# 121888-69-5, Reactive Blue 246, RB246 available from Arran Chemical Company of Co. Roscommon, Ireland and from Pharnorcia Inc. of Edison, New Jersey, USA), referred to herein as "RB246". Although RB246 has been found to be less effective than RB247 in stabilising a polymerizable formulation comprising at least 40% (wt/wt) of a polymerizable siloxane component, at least 30% (wt/wt) hydrophilic N-vinyl amide monomer(s) and TPP; RB246 has been found to have a beneficial effect on the stability of such formulations.

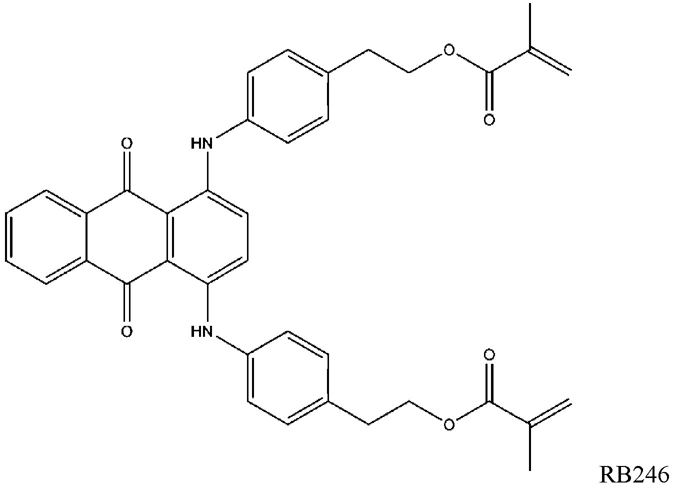

Advantageously, RB246 is present in formulations of the second aspect of the invention that lack RB247. RB246 can be present in the contact lens formulations of the invention, especially in formulations of the second aspect of the invention, in an amount of at least 0.003% (wt/wt), typically in an amount from about 0.005% (wt/wt) to 0.1% (wt/wt), such as from 0.006% (wt/wt) to 0.05% (wt/wt), or from 0.007% (wt/wt) to 0.03% (wt/wt).

The formulations of the second aspect of the present invention include a benzophenone UV absorbing agent and/or a benzotriazole HEVL absorber, preferably both a benzophenone UV absorbing agent and a benzotriazole HEVL absorber. The formulations of the first aspect of the present invention advantageously include a benzophenone UV absorbing agent and/or a benzotriazole HEVL absorber, preferably both a benzophenone UV absorbing agent and a benzotriazole HEVL absorber, in addition to RB247.

The term "UV absorbing agent", refers to a compound that includes a chromophore that absorbs light in the UV spectrum, i.e. wavelengths in the range of 100-400 nm. In particular, a 0.003 wt% solution of a UV absorbing agent in ethyl acetate has a maximum absorbance (λmax) in the range of 220-350 nm, especially in the range of 250-350 nm. The UV absorbing agent present in the formulation and lenses of the present invention advantageously has a maximum absorbance (λmax) in the 250 to 350 nm range between 260 and 320 nm, especially between 270 and 310 nm, as a 0.003 wt% solution in ethyl acetate.

The silicone hydrogel contact lens formulations of the invention may comprise a polymerizable UV absorbing agent comprising a benzophenone moiety. Likewise, the polymeric lens material of the silicone hydrogel contact lens of the invention may comprise a UV light absorbing unit comprising a benzophenone moiety. The UV light absorbing unit comprising a benzophenone moiety present in the polymeric lens materials of the contact lenses of the invention may be derived from the polymerizable UV absorbing agents described herein with reference to the formulations of the invention.

Polymerizable UV absorbing agents are advantageously covalently bound to the polymeric matrix of the lens material instead of simply being physically entrapped in the material to prevent the absorbing agents from migrating, phase separating or leaching out of the lens material. Such stability is advantageous because leaching of the UV absorbing agent may present toxicological issues and/or lead to the loss of UV blocking activity of the contact lens. The UV absorbing agents used in the present invention are typically soluble in the contact lens formulation and are polymerizable so that they form part of the polymeric matrix of the lens and are retained in the lens during autoclaving and storage. The UV absorbing agent is advantageously a polymerizable UV absorbing agent that includes a reactive group or groups capable of participating in a curing reaction by which the polymer matrix of the polymeric lens material is formed such that the polymerizable UV absorbing agent becomes covalently bound into the polymeric lens material. A polymerizable UV absorbing agent typically includes an ethylenically unsaturated group that can participate in a radical polymerisation reaction, such as a vinyl or a (meth)acrylate, a(meth)acrylamide or a styrene group. Numerous co-polymerizable benzophenone UV absorbing agents are known. Many of these UV absorbing agents contain ethylenically unsaturated polymerizable groups. Copolymerization with other ingredients in the lens materials, typically with a radical initiator, incorporates the UV absorbing agents into the resulting polymer chain. Incorporation of additional functional groups on a UV absorbing agents may influence one or more of the UV absorbing agent's UV absorbing properties, solubility or reactivity. If the UV absorbing agents does not have sufficient solubility in the remainder of the ophthalmic lens material ingredients or polymeric lens material, the UV absorbing agents may coalesce into domains that could interact with light and result in decreased optical clarity of the lens.

The benzophenone UV absorbing agent can be present in the formulations of the invention in an amount of from about 0.05 up to about 5.0% (wt/wt), typically in an amount of from about 0.1% (wt/wt) to about 3.0% (wt/wt), or from about 0.2% (wt/wt) to about 3.0% (wt/wt), such as from 0.3% (wt/wt) to 3.0% (wt/wt).

The silicone hydrogel contact lens formulations of the invention optionally comprise a polymerizable benzophenone UV absorbing agent which, as a 0.003 wt% solution in ethyl acetate, has a maximum absorbance (λmax) in the 250 to 380 nm range between 260 and 320 nm, especially between 270 and 310 nm. Thus, the polymeric lens material of the silicone hydrogel contact lens of the invention optionally comprises a UV light absorbing unit derived from a polymerizable benzophenone UV absorbing agent which, as a 0.003 wt% solution in ethyl acetate, has a maximum absorbance (λmax) in the 250 to 380 nm range between 260 and 320 nm, especially between 270 and 310 nm.

The silicone hydrogel contact lens formulations of the invention optionally comprise a polymerizable UV absorbing agent comprising a benzophenone moiety which, as a 0.003 wt% solution in ethyl acetate, has a maximum absorbance (λmax) in the 250 to 380 nm range between 260 and 320 nm, especially between 270 and 310 nm.

The benzophenone UV absorbing agent included in the formulations of the invention is favourably not a dual function HEVL absorber and UV absorbing agent. The benzophenone UV absorbing agent may have an absorbance cut off below the visible range, i.e. the benzophenone UV absorbing agent does not absorb significant amounts of light above 380 nm. For example, a 0.003 wt% solution of the benzophenone UV absorbing agent in ethyl acetate does not have an absorbance of at least 0.5 within the range of 375 to 450 nm.

The polymerizable UV absorbing agent is optionally: 2-(4-benzoyl-3-hydroxyphenoxy)ethyl acrylate (UV416; CAS #: 16432-81-8).

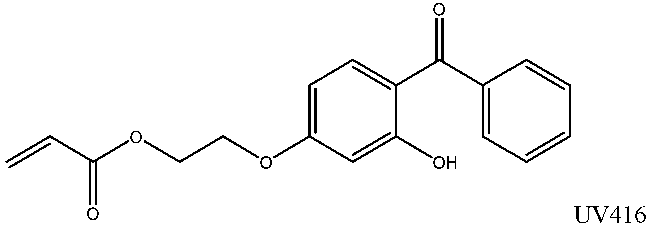

UV416 can be present in the polymerizable formulations of the invention, i.e. in formulations of the first or second aspect of the invention, in an amount of from about 0.05% (wt/wt) to about 5.0% (wt/wt), typically in an amount of from about 0.1% (wt/wt) to about 3.0% (wt/wt), or from about 0.2% (wt/wt) to about 3.0% (wt/wt), such as from 0.3% (wt/wt) to 3.0% (wt/wt).

The silicone hydrogel contact lens formulations of the invention optionally comprise a high energy visible light (HEVL) absorber. HEVL absorbers are compounds that include a chromophore that absorbs visible light in the violet-blue range of 350 to 455 nm. Typically, a HEVL absorber has a maximum absorbance (λmax) in the range of 350 to 455 nm, especially in the range of 350 to 400 nm. The term "high energy visible light (HEVL) absorber" as used herein may be defined as a compound or a mixture of compounds which, as a 0.003 wt% solution in ethyl acetate (≥99.8%, HPLC grade), has an absorbance of at least 0.5 within the range of 375 to 450 nm (solutions are measured in a 10 mm path length quartz cell and the absorbance of the solution from 250 to 800 mm measured using a Perkin Elmer Lambda 365). A HEVL absorber may additionally absorb light of shorter wavelengths, for example in the 250 to 350 nm range, and thus function both as a HEVL absorber and as a UV absorbing agent as discussed below.

The silicone hydrogel contact lens formulation of the first aspect of the invention may comprise a HEVL absorber, such as a benzotriazole HEVL absorber, in addition to the tinting agent RB247. The silicone hydrogel contact lens formulation of the second aspect of the invention may comprise a benzotriazole HEVL absorber or may comprise both a benzotriazole HEVL absorber and a benzophenone UV absorbing agent.

Advantageously, HEVL absorbers used in contact lens formulations, including the contact lens formulations of the present invention, possess a polymerizable moiety, such as vinyl, acrylate or methacrylate functionality in their chemical structure, for covalent incorporation into the contact lens material during polymerization. Once incorporated into a polymeric contact lens material, the HEVL absorber imparts HEVL absorption properties to the polymeric contact lens material. The HEVL absorber used in the present invention is typically soluble in the contact lens formulation and is polymerizable so that it forms part of the polymeric matrix of the lens and is retained in the lens during autoclave and storage. The HEVL absorber may include a benzotriazole ring system.

The HEVL absorber may be present in an amount of from 0.3% to 3% (wt/wt), preferably from 0.4% to 3% (wt/wt), based on the total amount of the formulation. If the HEVL absorber comprises more than one compound, the total amount of compounds having a maximum absorbance (λmax) in the range of 350-455 nm, are present in an amount of from 0.3% to 3% (wt/wt), preferably from 0.4% to 3% (wt/wt), based on the total amount of the formulation.

Examples of benzotriazole HEVL absorbers include:
2-(1,1-dimethylethyl)-4-[3-[(4-ethenyl phenyl) methoxy]propoxy]-6-(5-methoxy-2H-benzotriazol-2-yl)-phenol (UV1, CAS # 159732-06-6): 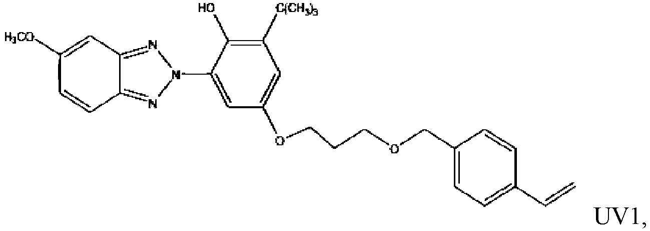
2-(5-chloro-2H-benzotriazol-2-yl)-6-(1,1-dimethylethyl)-4-ethenyl-phenol (UV5 / UVAM, CAS # 124883-10-9): 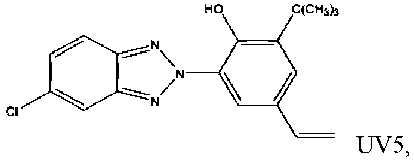
2-[2'-hydroxy-3'-tert-butyl-5'-(3"-methacryloyloxypropoxy)phenyl]-5-methoxy-2H-benzotriazole (UV13, CAS # 114166-71-1): 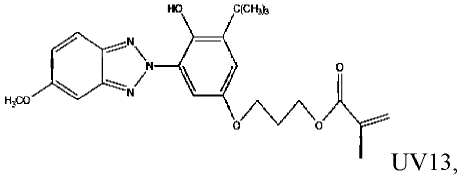
2-3'-t-butyl-2'-hydroxy-5'-(3"-dimethylvinylsilylpropoxy)-2'-hydroxy-phenyl)-5-methoxybenzotriazole (UV15, CAS # 122430-79-9): 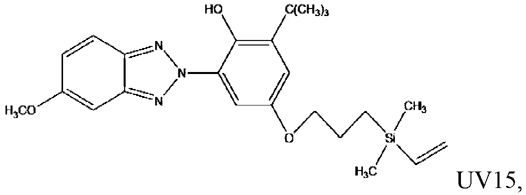
2-[2'-hydroxy-3'-tert-butyl-5'-(3"-methacryloyloxypropoxy)phenyl]-5-chloro-2H-benzotriazole (UV28, CAS # 275371-71-6): 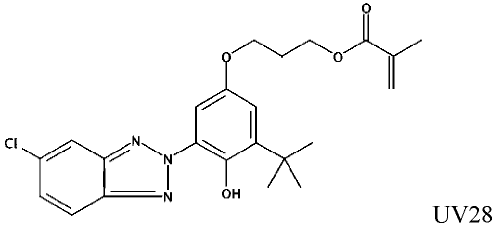
All the above HEVL absorbers are available from LYNN Laboratories, Inc. of 2797 Irving Blvd STE 110, Dallas, TX 75207.

Advantageously, a 0.003 wt% solution in ethyl acetate of the HEVL absorber has an absorbance peak in the range of 360 to 410 nm, such as 360 to 400 nm, especially 360 to 390 nm.

Optionally, the total amount of HEVL absorber and UV absorbing agent present in the formulation of the invention does not exceed 5% (wt/wt). Optionally the formulation of the invention comprises HEVL absorber and UV absorbing agent in a total amount of from 0.2% to 5% (wt/wt), and preferably from 0.4% to 4% (wt/wt).

A compound may function as both a HEVL absorber and a UV absorbing agent. The term "HEVL absorber" as used herein encompasses compounds that function solely as a HEVL absorber and compounds that function as both a HEVL absorber and a UV absorbing agent. The benzophenone UV absorbing agent included in the formulations of the invention is favourably not a dual function HEVL absorber and UV absorbing agent. The benzotriazole HEVL absorber included in the formulations of the invention may be a dual function HEVL absorber and UV absorbing agent in some embodiments. The UV absorbing agent may have an absorbance cut off below the visible range i.e. does not absorb significant amounts of light above 380 nm. For example, a 0.003 wt% solution of the UV absorbing agent in ethyl acetate does not have an absorbance of at least 0.5 within in the range of 375 to 450 nm. The HEVL absorber present in the formulations of the invention has an absorption above 0.5 in the range of 375 to 450 nm as a 0.003 wt% solution in ethyl acetate and may optionally also have a maximum absorbance (λmax) in the range of 220 to 350 nm, especially in the range of 250 to 350 nm.

The formulations of the first aspect of the invention that comprise RB247, advantageously further comprise UV416 and a benzotriazole HEVL absorbing agent, especially UV13 or UV28. A combination of RB247, UV416 and UV13 or UV28 has been found to be particularly effective in reducing the gelation of a polymerizable formulation comprising at least 40% (wt/wt) of a polymerizable siloxane component, at least 30% (wt/wt) hydrophilic N-vinyl amide monomer(s) and TPP.

The formulations of the second aspect of the invention advantageously comprise both UV416 and a benzotriazole HEVL absorbing agent, especially UV13 or UV28. A combination of UV416 and UV13 or UV28 has been found to be effective in reducing the gelation of a polymerizable formulation comprising at least 40% (wt/wt) of a polymerizable siloxane component, at least 30% (wt/wt) hydrophilic N-vinyl amide monomer(s) and TPP. The formulations of the second aspect of the invention may comprise RB246 in addition to a benzotriazole UV absorber and/or a benzotriazole HEVL absorbing agent. The formulations of the second aspect of the invention may comprise UV416, UV13 or UV28, and RB246.

The contact lens formulations of the invention are silicone hydrogel contact lens formulations comprising:
a. at least 40% (wt/wt) of a polymerizable siloxane component; and
b. at least 30% (wt/wt) of hydrophilic N-vinyl amide monomer(s).

A "silicone hydrogel" refers to a crosslinked polymeric material having a three-dimensional polymer network (i.e., polymer matrix) comprising siloxane units, that is insoluble in water, but contains at least 10 percent by weight of water in its polymer matrix when fully hydrated. A "silicone hydrogel" is obtained by polymerization of a polymerizable composition comprising at least one silicone-containing component, typically at least one silicone-containing monomer or at least one silicone-containing pre-polymer or at least one cross-linkable silicone-containing pre-polymer.

Typically, silicone hydrogel contact lenses are formed through free-radical propagated reactions involving the polymerisation of terminal ethylenically unsaturated groups, also referred to herein as "polymerizable groups". Exemplary polymerizable groups include (meth)acryl, (meth)acrylamide, allyl and vinyl and styrenyl groups. As used herein, a "vinyl-containing monomer" is any non-siloxane monomer that has a single polymerizable carbon-carbon double bond (i.e., a vinyl group) present in its molecular structure, where the carbon-carbon double bond of the vinyl group is attached to an sp3 hybridized carbon atom. A vinyl group is less reactive than the carbon-carbon double bond present in an acrylate or a methacrylate polymerizable group under free radical polymerization. The term "(meth)acrylamide" refers to methacrylamide and/or acrylamide. The term "(meth)acrylate" refers to methacrylate and/or acrylate. The term "terminal (meth)acryl group" refers to one (meth)acryl group at one of two ends of the main chain (or backbone) of an organic compound. An "N-vinyl amide monomer" refers to an amide compound having a vinyl group CH=CH2 that is directly attached to the nitrogen atom of the amide group.

A "monomer" is a molecule having one or more polymerizable groups that can react together with other monomers that are the same or different to form a larger polymer or copolymer chain or three-dimensional matrix in a polymerization process. A monomer having two or more polymerizable groups can be referred to as a "cross-linking agent", as described further below. The term "monomer" encompasses macromonomers and polymerizable oligomers, i.e. a polymerizable molecule that contains one or more chains of repeating units, such as for example polymerizable polysiloxanes; thus there is no size-constraint (i.e. maximum molecular weight) of the monomer unless indicated otherwise. The term "polymer" refers a material formed by polymerizing and/or crosslinking one or more monomers.

As used in this application, the term "molecular weight" of a polymeric material, including components comprising multiple siloxane units, refers to the absolute number average molecular weight (in units of daltons), for example determined by GPC using polystyrene standards or by 1H NMR end-group analysis, unless otherwise noted specifically. An "oligomer" is a compound that consists of 2 to 10 repeating units which could be derived, actually or conceptually, from monomers. A pre-polymer is a partially polymerized polymer comprising multiple monomeric units, typically more than 10, reacted to an intermediate-molecular mass state that retains the ability to continue reacting to fully cure into a higher molecular mass polymeric material.

The silicone hydrogel contact lens formulations of the invention may include other hydrophilic monomers in addition to the N-vinyl amide-containing monomers and may also include hydrophobic monomers.

As used herein, a "hydrophilic monomer" refers to a silicone-free monomer in which at least 50 grams of the monomer are fully soluble in 1 litre of water at 20 °C (i.e., ~ 5% soluble in water) as determined visibly using a standard shake flask method.

The silicone hydrogel contact lens formulation comprises one or more hydrophilic N-vinyl amide-containing monomer in an amount of at least 30% (wt/wt), such as in an amount of at least 35% (wt/wt), especially in an amount of at least 35% (wt/wt). The formulation may additionally include other hydrophilic monomers such as hydrophilic vinyl ether-containing monomers.

In some examples, the hydrophilic N-vinyl amide-containing monomers can be selected from N-vinyl-N-methyl acetamide (VMA), or N-vinyl pyrrolidone (NVP), or N-vinyl formamide, or N-vinyl acetamide, or N-vinyl-N-ethyl acetamide, or N-vinyl isopropylamide, or N-vinyl caprolactam, or N-vinyl-N-ethyl formamide, or any combination thereof. In some examples, the hydrophilic N-vinyl amide-containing monomer consists of VMA or NVP, or a combination of VMA and NVP. The optional vinyl ether-containing monomers can be selected from 1,4-butanediol vinyl ether (BVE), or ethylene glycol vinyl ether (EGVE), or diethylene glycol vinyl ether (DEGVE), or 1,4-cyclohexanedimethanol vinyl ether (CHDMVE), or a poly(ethylene glycol) vinyl ether having from 4 to 10 ethylene glycol units, or a poly(ethylene glycol) vinyl ether having more than 10 ethylene glycol units, or any combination thereof. In some examples, the vinyl ether-containing monomer can be a poly(ethylene glycol) vinyl ether having at least 1, 2, or 3 ethylene glycol units and up to 4, 6, 8, or 10 ethylene glycol units. One or more vinyl-containing monomers, in addition to the hydrophilic N-vinyl amide-containing monomers and optional hydrophilic vinyl ether-containing monomers, may be included in the formulations of the invention described herein. For example, vinyl monomers having a vinyl ester or allyl ester polymerizable group may be included in the formulations of the invention in addition to the vinyl amide-containing monomers and vinyl ether-containing monomers. The hydrophilic monomer may be a (meth)acrylate or (meth)acrylamide group-containing hydrophilic monomer, examples of which include 2-hydroxyethyl methacrylate (HEMA), 4-hydroxybutyl acrylate glycerol methacrylate, 2-hydroxyethyl methacrylamide, ethoxyethyl methacrylamide (EOEMA), polyethyleneglycol monomethacrylate, methacrylic acid (MA) and acrylic acid.

The formulations of the first and second aspects of the invention include at least one N-vinyl amide hydrophilic monomer, in an amount of at least 30% (wt/wt), especially in an amount of at least 35% (wt/wt). The formulations of the first and second aspects of the invention may include N-vinyl amide hydrophilic monomers in an amount of from 35 to 55%, especially from 37 to 50%. The formulations of the first and second aspects of the invention may include N-methyl N-vinyl acetamide in an amount of from 30 to 55%, such as from 35 to 50%, especially from 37 to 50%.

Where more than one hydrophilic monomer is included in the formulations of the invention, advantageously at least 70% or 80% by weight of the hydrophilic monomers have a solubility in water of ≥ 20%. In a specific example, 100% of the hydrophilic vinyl-containing monomer in the polymerizable composition has a solubility in water of ≥ 10%. The hydrophilic vinyl-containing monomer typically has a molecular weight of about 75 to about 500, and more typically about 75 to 250.

The formulations of the invention may optionally include hydrophobic monomers that lack siloxane groups. The term "hydrophobic monomer", as used herein, refers to a monomer that lacks siloxane groups and which is less than 5% soluble in water at 20 °C as determined using a standard shake flask method.

Hydrophobic monomers may be (meth)acrylate group-containing hydrophobic monomers. As used herein, a "hydrophobic acrylate-containing monomer" is any non-siloxane monomer that has a single polymerizable acrylate group (e.g. methyl methacrylate, acrylamide, etc.). In a specific example, the hydrophobic acrylate-containing monomer has a polymerizable methacrylate group. Numerous suitable acrylate-containing monomers are known in the field. Exemplary hydrophobic acrylate-containing monomers include methyl acrylate, isopropyl acrylate, cyclohexyl acrylate, methyl methacrylate (MMA), butyl acrylate, tert-butyl methacrylate (tBMA), perfluorohexylethylthiocarbonylaminoethyl methacrylate, isobornyl methacrylate (IBM), trifluoroethyl methacrylate, hexafluoroisopropyl methacrylate, hexafluorobutyl methacrylate, 2-hydroxybutyl methacrylate (HOB), 2-hydroxypropyl methacrylate (HPMA), and ethylene glycol methyl ether methacrylate (EGMA). Favoured non-siloxane hydrophobic monomers include hydroxybutyl methacrylate, isobornyl methacrylate or a combination of hydroxybutyl methacrylate and isobornyl methacrylate. A silicone hydrogel contact lens formulation may comprise an acrylate-containing hydrophobic monomer to further enhance mechanical strength and/or stiffness of the lens, or confer other desired properties.

Hydrophobic monomers that lack siloxane groups are not restricted to (meth)acrylate group-containing monomers and may comprise vinyl or other ethylenically unsaturated reactive groups. Further examples of hydrophobic monomers include vinyl acetate, vinyl propionate, vinyl butyrate, styrene, chloroprene, vinyl chloride, vinylidene chloride, acrylonitrile, and methacrylonitrile.

The polymerizable formulation may comprise from about 2% to about 20% (wt/wt), such as 4% to 16% (wt/wt) especially 6% to 12% (wt/wt) of a non-siloxane hydrophobic monomer component. From 2 to 20% (wt/wt), especially from 5 to 15% (wt/wt) of the formulation may be hydroxybutyl methacrylate, isobornyl methacrylate or a combination of hydroxybutyl methacrylate and isobornyl methacrylate.

A "siloxane monomer", as used herein, refers to a monomer having at least one siloxane group. The siloxane monomer may comprise a terminal acrylate or methacrylate group. (Meth)acrylate-containing siloxane monomers that can be used in the formulations of the invention described herein are well-known in the field. The siloxane monomers may be mono-functional (meth)acrylate-containing siloxanes, di-functional (meth)acrylate-containing siloxanes or comprise a combination of mono- and di-functional (meth)acrylate-containing siloxane monomers. In examples where the (meth)acrylate-containing siloxane monomers consist of one or more mono-functional (meth)acrylate-containing siloxane monomers (i.e. it does not contain any multi-functional (meth)acrylate-containing siloxane monomers), the polymerizable composition will typically further comprise a (meth)acrylate-containing cross-linking agent, described further below. In a specific example, the (meth)acrylate-containing siloxane monomer has one or more polymerizable methacrylate groups. Various non-limiting examples of suitable acrylate-containing siloxane monomers include 3-[tris(trimethylsiloxy)silyl]propyl methacrylate ("TRIS"), 3-methacryloxy-2-hydroxypropyloxy) propylbis(trimethylsiloxy)methylsilane ("SiGMA"), methyldi(trimethylsiloxy)sylylpropylglycerolethyl methacrylate ("SiGEMA"), and monomethacryloxypropyl functional polydimethylsiloxanes such as MCR-M07 and MCS-M11, all available from Gelest (Morrisville, PA, USA).

The silicone hydrogel contact lens formulations of the invention comprise a polymerizable siloxane component in an amount of at least 40% (wt/wt), such as in an amount of at least 42% (wt/wt), especially in an amount of at least 45% (wt/wt). The polymerizable siloxane component typically constitutes no more than 60% wt/wt) of the formulation, for example no more than 55% (wt/wt) of the formulation.

The silicone hydrogel contact lens formulation may include at least one di-functional siloxane having a molecular weight of at least 5,000 daltons. At least 30% (wt/wt) of the siloxane content may be di-functional siloxanes having a molecular weight of at least 5,000 daltons. Advantageously, at least 40% (wt/wt) of the siloxane content is di-functional having a molecular weight of at least 5,000 daltons. The formulation may comprise between 15 and 45 (wt/wt) di-functional siloxane, for example, between 20 and 40 (wt/wt) di-functional siloxane having a molecular weight of at least 5,000 daltons. The di-functional siloxanes typically have molecular weight of less than 25,000 daltons, such as a molecular weight of less than 20,000 daltons, especially a molecular weight of less than 15,000 daltons. It has been found that including siloxanes having higher molecular weights can result in formulations that have an unacceptably high viscosity. The silicone hydrogel contact lens formulation may include at least one di-functional siloxane having a molecular weight of from 5,000 to 25,000 daltons, for example at least one di-functional siloxane having a molecular weight of from 6,500 to 20,000 daltons, especially at least one di-functional siloxane having a molecular weight of at least 8,000 to 15,000 daltons.

The silicone hydrogel contact lens formulation may include at least one mono-functional siloxane monomer, for example, having a molecular weight of less than 3000 daltons. At least 20% (wt/wt) of the siloxane content may be mono-functional siloxanes having a molecular weight of less than 3000 daltons. Advantageously, at least 30% (wt/wt) of the siloxane content is mono-functional having a molecular weight of less than 3000 daltons. The formulation may comprise between 10 and 30 wt% mono-functional siloxane monomer(s), for example, between 10 and 30 wt% mono-functional siloxane monomer(s) having a molecular weight of less than 3000 daltons. The mono-functional siloxanes typically have a molecular weight of at least 200 daltons.

In one example, the mono-functional siloxane monomer may comprise a (meth)acrylate-containing siloxane monomer represented by formula (I), 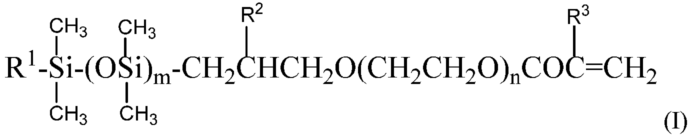 where m is an integer from 3 to 10, n is an integer from 0 to 10, R¹ is an alkyl group having 1 to 4 carbon atoms, R² is hydrogen or a methyl group, and R³ is hydrogen or a methyl group. In a further specific example, the acrylate-containing siloxane monomer is represented by formula I wherein R¹ is a butyl group, R² is hydrogen, R³ is a methyl group, m is 4, and n is 1. Methods of making siloxane monomers represented by formula (I) are described in U.S. Publ. no. 2009/0299022.

In another example, the mono-functional siloxane monomer may comprise a (meth)acrylate-containing siloxane monomer represented by formula (II), 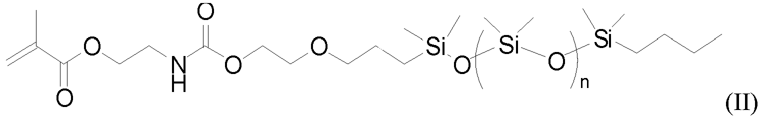 where n is an integer from about 10 to 25, especially from 10 to 20. Siloxane monomers of formula II and other suitable monomers are described in U.S. Pat. No. 6,867,245 and U.S. Pat. No. 6,310,169.

Examples of suitable commercially available mono-functional siloxane monomers include 2-propenoic acid, 2-methyl-, 2-[3-(9-butyl-1,1,3,3,5,5,7,7,9,9-decamethylpentasiloxane-1-yl)propoxy]ethyl ester, X-22-1622 available from Shin-Etsu Chemical Co., Ltd., Tokyo, Japan (CAS # 1052075-57-6), the methacryloxypropyl terminated poly(dimethyl) siloxane FMM Shin-Etsu Silicones of America, Akron, Ohio, USA (CAS # 697234-76-7) and 3-methacryloxy-2-hydroxypropyloxy)propylbis (trimethylsiloxy)methylsilane SiGMA.

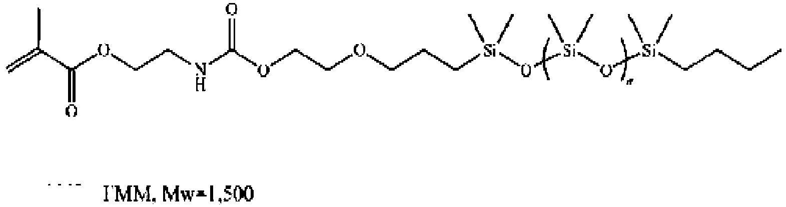

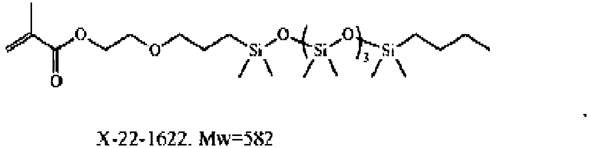

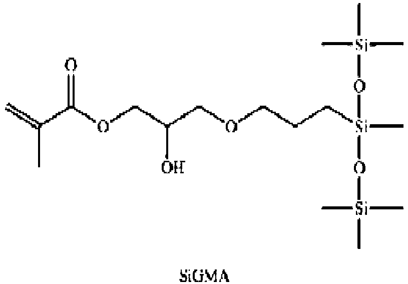

The silicone hydrogel contact lens formulation includes at least one di-functional siloxane having a molecular weight of at least 5,000 daltons, for example at least 6,500 daltons, especially at least 8,000 daltons. The formulation may comprise between 10 and 45 wt% di-functional siloxane monomer(s), especially between 20 and 40 wt% di-functional siloxane monomer(s). The formulation may comprise between 10 and 45 wt% or between 20 and 40 wt% di-functional siloxane monomer(s) having a molecular weight of at least 8,000 daltons.

In one example, the di-functional siloxane monomer(s) may comprise a siloxane monomer represented by formula (III), 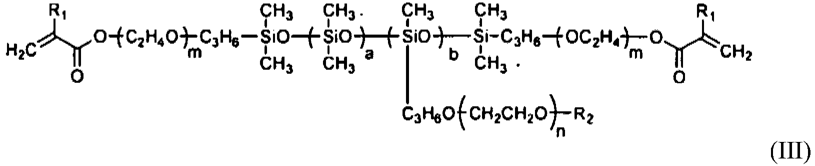 wherein R₁ is selected from either hydrogen or a methyl group; R₂ is selected from either hydrogen or a C₁₋₄ hydrocarbon group; m represents an integer of from 0 to 10; n represents an integer of from 4 up to about 15, 25, or 100; a and b represent integers of 1 or more; a+b is equal to 20-500; b/(a+b) is equal to 0.01-0.22; and the configuration of siloxane units includes a random configuration.

Other suitable di-functional siloxane monomers are represented by formula (IV): 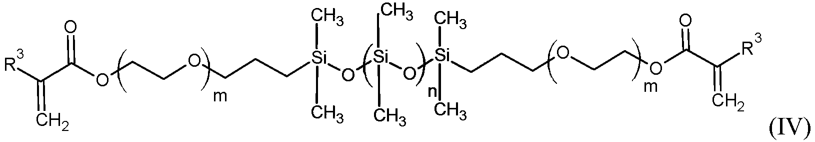 wherein R³ is selected from either hydrogen or a methyl group, m represents an integer from 0 to 10, and n represents an integer from 1 to 500. In a specific example, a suitable di-functional siloxane monomer is a methacryloxypropyl-terminated polydimethylsiloxane represented by formula IV where R³ is a methyl group, m is 0, and n is an integer from 40 to 60 having a Mw of 4500 to 5500 is available from Gelest (Morrisville, PA, USA) and is referred to as "DMS-R18" from the manufacturer. Additional suitable methacryloxypropyl-terminated polydimethylsiloxanes include DMS-R22 and DMS-R31, also available from Gelest.

Yet another suitable di-functional siloxane monomer is represented by formula (V), 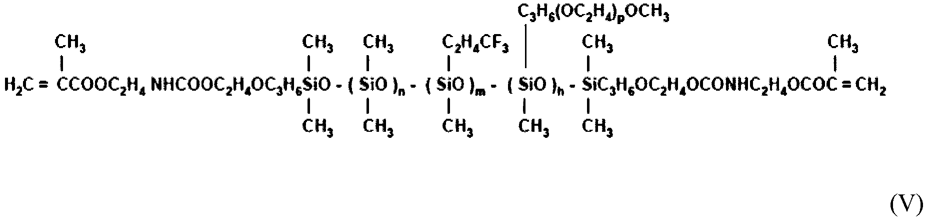 wherein n is an integer of about 100 to 150, m and p are both integers of about 5 to 10, and h is an integer of about 2 to 8. Methods of making compounds of formula V are described in U.S. Pat. No. 6,867,245. Additional siloxane monomers that can be used in the formulations of the invention described herein are known in the field (see e.g. U.S. Pat. No. 7,572,841, U.S. Pat. No. 2006/0063852, and U.S, Pat. No. 5,998,498).

In one example, the siloxane monomers may comprise a combination of a mono-functional (meth)acrylate-containing siloxane monomer and a di-functional (meth)acrylate-containing siloxane monomer. In one such example, the mono-functional (meth)acrylate-containing siloxane monomer has a molecular weight of less than 2,000, 1,000, or 750 daltons and the di-functional acrylate-containing siloxane monomer has a molecular weight of at least 3,000, 5,000 or 8,000 daltons. In a specific example, the mono-functional (meth)acrylate-containing siloxane monomer has a molecular weight of from about 250 to about 1000 daltons. In a further specific example, the mono-functional (meth)acrylate-containing siloxane monomer has a molecular weight of from about 500 to about 1000 daltons.

The silicone hydrogel contact lens formulations of the invention typically comprise one or more polymerization initiators, i.e., the formulations can comprise an initiator, or can comprise an initiator component comprising two or more polymerization initiators or a combination of polymerization initiators, synergists and activators. The term "initiator" refers to a chemical that initiates crosslinking/polymerizing reaction. The initiator is typically a free radical initiator that forms radicals that initiate radical propagated polymerisation reactions. Polymerization initiators that may be included in the formulations of the invention include, for example, azo compounds, or organic peroxides, or both. The initiator may be a photoinitiator that is activated on exposure to actinic radiation, such as UV light, or a thermal initiator that is activated on exposure to heat. Initiators that can be present in the polymerizable formulations include, for example, benzoin ethyl ether, or benzyl dimethyl ketal, or alpha, alpha-diethoxyacetophenone, or 2,4,6-trimethylbenzoyl diphenyl phosphine oxide, or benzoin peroxide, or t-butyl peroxide, or azobisisobutyronitorile, or azobisdimethylvaleronitorile, or any combination thereof. UV photoinitiators can include, for example, phosphine oxides such as diphenyl (2,4,6-trimethyl benzoyl) phosphine oxide, or benzoin methyl ether, or 1-hydroxycyclohexylphenyl ketone, or Darocur (available from BASF, Florham Park, N.J., USA), or Irgacur (also available from BASF), or any combination thereof. Advantageously the polymerization initiator is a thermal initiator. Examples of suitable thermal initiators include 2,2'-azobis-2-methyl propanenitrile (VAZO-64 from E.I. DuPont de Nemours & Co., Wilmington, Del., USA), 2,2'-azobis(2,4-dimethylpentanenitrile) (VAZO-52) and 1,1'-azo bis(cyanocyclohexane) (VAZO-88 also from E.I. DuPont). The polymerization initiator or initiator component can be present in the silicone hydrogel contact lens formulations of the invention in an amount from about 0.1% (wt/wt) to about 1.5% (wt/wt), or from about 0.2% (wt/wt) to about 1.0% (wt/wt), especially from about 0.2 to about 0.8% (wt/wt). The formulations of the first and second aspects of the invention are optionally thermally cured formulations comprising at least one thermal initiator. Thermal curing or actinic curing methods are well-known to a person skilled in the art.

The silicone hydrogel contact lens formulation may further comprise a crosslinking agent. A cross-linking agent can react with functional groups on two or more polymer chains to bridge one polymer to another. As used herein, a "cross-linking agent" is any compound having a molecular weight of less than about 2000 daltons, typically less than 700 daltons with two or more polymerizable groups. As used herein, "acrylate-containing cross-linking agent" has at least two polymerizable acrylate groups, and no other type of polymerizable group. A "vinyl-containing cross-linking agent" has at least two polymerizable vinyl groups, and no other type of polymerizable group. The vinyl-containing cross-linking agents, as well as the acrylate-containing cross-linking agents, typically can have a molecular weight of less than 1500, 1000, 500, or 250 daltons. Examples of vinyl-containing cross-linking agents that can be used in the formulations of the invention disclosed herein include, without limitation, divinyl ethers, or divinyl sulfones, or triallyl isocyanurates, and any combination thereof. Exemplary divinyl ethers include diethyleneglycol divinyl ether, or triethyleneglycol divinyl, or 1,4-butanediol divinyl ether, or 1,4-cyclohexanedimethanol divinyl ether, or any combination thereof. Typically, the vinyl-containing cross-linking agent can have two or three polymerizable vinyl groups. When present, the total amount of vinyl-containing cross-linking agent in the silicone hydrogel contact lens formulation is typically from about 0.02, 0.04, or 0.06 mol. % up to about 0.10, 0.15, or 0.20 mol. %. Examples of acrylate-containing cross-linking agents that can be used in the formulations of the invention, include, without limitation, lower alkylene glycol di(meth)acrylate, poly(lower alkylene) glycol di(meth)acrylate, lower alkylene di(meth)acrylate, trimethylolpropane tri(meth)acrylate, pentaerythritol tetra(meth)acrylate, bisphenol A di(meth)acrylate, methylenebis(meth)acrylamide, and 1,3-bis(3-methacryloxypropyl) tetramethyldisiloxane. In certain examples the acrylate-containing cross-linking agent is a non-siloxane cross-linking agent. When present, the total amount of acrylate-containing cross-linking agent in the silicone hydrogel contact lens formulation is typically from about 0.20, 0.25, 0.30, or 0.35 mol. % up to about 0.50, 0.60, 0.70, 0.80, or 1.0 mol. %. For the avoidance of doubt, multi-functional polymerizable compounds having a molecular weight of more than 2000 daltons are not considered to be cross-linking agents. Thus di-functional siloxanes as described herein having a molecular weight of more than 2000 daltons are not considered to be cross-linking agents.

The polymerizable formulations may optionally further comprise a chain transfer agent. Chain transfer is a polymerization reaction in which the activity of a growing polymer chain is transferred to another molecule, reducing the average molecular weight of the final polymer. Examples of chain transfer agents include, for example, thiol compounds, halocarbon compounds or C3-C5 hydrocarbons, such as allyloxy ethanol.

The formulations of the invention may comprise non-polymerizable ingredients, in addition to the polymerizable ingredients, that are conventionally used in contact lens formulations. Additional ingredients may also be included such as an organic diluent or an oxygen scavenger. Non-limiting examples of these and additional ingredients that may be included in the polymerizable composition are provided in US 2007/0296914.

Favoured formulations of the invention comprise a siloxane component present in an amount of at least 40% (wt/wt), wherein at least 40% of the siloxane content is di-functional siloxanes having a molecular weight of at least 5,000 daltons; and an N-vinyl amide monomer component present in an amount of at least 37% (wt/wt). The contact lenses of the invention favourably comprise a polymeric lens material derived from a favoured formulation of the invention comprising a monomers and siloxane components described above. The favoured formulations described above have been found to be particularly suitable for use in combination with (1) RB-247, (2) TPP, and (3) a polymerizable UV absorbing agent comprising a benzophenone moiety, for example UV416, and/or a benzotriaziole HEVL absorber.

A particularly favoured silicone hydrogel contact lens formulation of the invention comprises from 40 wt% to 55 wt% of a siloxane component, e.g. comprising a siloxane monomer or a combination of siloxane monomers, from 30 wt% to 55 wt% of a N-vinyl amide monomer(s) selected from NVP, VMA, or combinations thereof, and optionally from about 1 wt% to about 20 wt% of a hydrophilic monomer selected from N,N-dimethylacrylamide (DMA), 2-hydroxyethyl methacrylate (HEMA), ethoxyethyl methacrylamide (EOEMA), or any combination thereof, and optionally from about 1 wt% to about 20 wt% of a hydrophobic monomer selected from methyl methacrylate (MMA), isobornyl methacrylate (IBM), or 2-hydroxybutyl methacrylate (HOB) or any combination thereof.

In a fifth aspect, the invention provides the use of one or more of an anthraquinone blue tinting agent, a benzophenone UV-absorbing agent and a benzotriazole HEVL absorber to stabilise a formulation comprising:
a. at least 40% (wt/wt) of a polymerizable siloxane component;
b. at least 30% (wt/wt) of hydrophilic N-vinyl amide monomer(s); and
c. triphenylphosphine (TPP).

An anthraquinone blue tinting agent, a benzophenone UV-absorbing agent and a benzotriazole HEVL absorber may be alone or in any combination. For example, the fifth aspect of the invention provides the use of (i) an anthraquinone blue tinting agent and a benzophenone UV-absorbing agent, (ii) an anthraquinone blue tinting agent and a benzotriazole HEVL absorber, (iii) a benzophenone UV-absorbing agent and a benzotriazole HEVL absorber, or (iv) an anthraquinone blue tinting agent and a benzophenone UV-absorbing agent and a benzotriazole HEVL absorber, to stabilise a formulation comprising:
a. at least 40% (wt/wt) of a polymerizable siloxane component;
b. at least 30% (wt/wt) of hydrophilic N-vinyl amide monomer(s); and
c. triphenylphosphine (TPP).

The anthraquinone blue tinting agent used in the fifth aspect of the invention is advantageously 1,4-bis[(2-methacryloxyethyl) amino]-9,10-anthraquinone (RB247) or 1,4-bis[4-(2-methacryloxyethyl) phenylamino]-9,10-anthraquinone (RB246), especially RB247. The benzophenone UV-absorbing agent used in the fifth aspect of the invention is advantageously UV416. The benzotriazole HEVL absorber used in the fifth aspect of the invention may be any benzotriazole HEVL described herein, advantageously UV13 or UV28.

Advantageously, the amounts of anthraquinone blue tinting agent, benzophenone UV-absorbing agent and benzotriazole HEVL absorber described above with respect to formulations of the invention are used to stabilise formulations in the fifth aspect of the invention.

The formulations that are stabilised in the fifth aspect of the invention are advantageously those described above with respect to formulations of the other aspects of the invention. For example, the formulations stabilised in the fifth aspect of the invention may comprise any or all of the siloxane components, hydrophilic N-vinyl amide monomer(s), optional further hydrophilic monomers, optional further hydrophobic monomers, optional crosslinkers, optional chain transfer agents and optional radical initiators that are described above. Also for example, the formulations stabilised in the fifth aspect of the invention comprise siloxane components, hydrophilic N-vinyl amide monomer(s), optional further hydrophilic monomers and optional further hydrophobic monomers in the amounts described above with respect to formulations of the invention.

### EXAMPLES

The following Examples illustrate certain aspects and advantages of the present invention, which should be understood not to be limited thereby.

### Base formulation 1a/1b

Base polymerizable silicone hydrogel contact lens **formulation 1a** was prepared containing:
- 9 parts by weight hydrophobic monomers (consisting of 2 parts isobornyl methacrylate (IBM) and 7 parts hydroxybutyl methacrylate (HOB)),
- 39 parts by weight hydrophilic *N*-vinyl amide monomers (8.6 parts *N*-vinyl *N-methyl* acetamide (VMA) and 0.4 parts *N*-vinyl pyrrolidone (NVP)),
- 49 parts by weight of polymerizable siloxanes (18.13 parts FMM, 30.38 parts M5A and 0.49 parts X-22-1622), and
- 1 part by weight of other agents including a thermal initiator (VAZO-64) and a crosslinker (triallyl isocyanate).

Base polymerizable silicone hydrogel contact lens **formulation 1b** was prepared containing:
- 9 parts by weight hydrophobic monomers (2 parts isobornyl methacrylate (IBM) and 7 parts hydroxybutyl methacrylate (HOB)),
- 39 parts by weight hydrophilic N-vinyl amide monomers (N-vinyl *N-methyl* acetamide (VMA)),
- 49 parts by weight of polymerizable siloxanes (18.04 parts FMM, 30.23 parts M5A and 0.49 parts X-22-1622), and
- 1 part by weight of other agents including a thermal initiator (VAZO-64) and a crosslinker (triallyl isocyanate).

The monomers were obtained from commercially available sources and are believed to include trace amounts of polymerisation inhibitors.

### Base formulation 2

Base **formulation 2** was prepared containing:
- 13 parts by weight hydrophobic monomers (methyl methacrylate (MMA)),
- 42 parts by weight hydrophilic *N*-vinyl amide monomers (*N*-vinyl *N-methyl* acetamide (VMA),
- 6 parts by weight hydrophilic acrylate monomers (ethylene glycol methacrylate (EGMA)),
- 35 parts by weight of polymerizable siloxanes (8.83 parts M5A and 26.48 parts X-22-1622), and
- 2 parts by weight of other agents including a thermal initiator (VAZO-64) and a crosslinker (0.09 parts triethylene glycol divinyl ether (TEGDVE) and 0.44 parts ethylene glycol dimethacrylate (EGDMA)).

The monomers were obtained from commercially available sources and are believed to include trace amounts of polymerisation inhibitors.

### Effect of TPP on Gelation

The following examples illustrate the effects of TPP on the formulation gelation, and how this changes depending on the handling tint, UV absorbing agent, and/or HEVL absorber.

Polymerizable mixtures that combine base **formulation 1a** and **formulation 2** with tinting agent RB246, UV absorbing agent Norbloc (i.e. 2-(3-(2H-benzotriazol-2-yl)-4-hydroxy-phenyl)ethyl methacrylate, CAS # 96478-09-0, NORBLOC 7966 from Noramco, Athens, GA., USA) and either no TPP or TPP in the amounts shown in Table 1 were freshly prepared and either 25 g or 12.5 g of the mixture was placed into closed 37 ml vials to mimic a small or large air headspace, respectively, above the monomer mixture surface. These were then placed into a water bath at 17 °C and the mixtures visually assessed for gelation at intervals each day.

**Table 1. Gelation onset times with and without TPP**

| **Mixture** | **Base** | **Tint (parts by weight)** | **UV / HEVL blockers (parts by weight)** | **TPP (parts by weight)** | **Time to gelation** | |
|---|---|---|---|---|---|---|
| | | | | | **12.5g formulation** | **25g formulation** |
| 1 | 1a | RB246 (0.0082) | Norbloc (1.36) | Zero | >9 days | >9 days |
| 2 | 2 | RB246 (0.0090) | Norbloc (0.79) | Zero | >9 **days** | >8 **days** |
| 3 | 1a | RB246 (0.0082) | Norbloc (1.36) | 0.41 | <1 day | <1 day |
| 4 | 2 | RB246 (0.0090) | Norbloc (0.79) | 0.44 | >9 days | <1 day |

No gelation was observed for comparative **mix 1** and comparative **mix 2** comprising base **formulation 1a** or base **formulation 2** respectively that lack TPP in either the large or small headspace samples after storage in the water bath for 8 days.

Comparative **mixes 3 and** 4 containing base **formulation 1a** or base **formulation 2** together with approximately 0.4 parts by weight TPP were seen to gel rapidly in small headspace samples. While comparative **mix 4** gelled rapidly in small headspace samples, no gelation was seen after 8 days in large headspace samples.

These results demonstrate that mixtures based on **formulation 2,** which includes higher amounts of hydrophilic monomers and lower amounts of siloxanes than **formulation 1a,** can tolerate the inclusion of TPP when oxygen is present, i.e. in large headspace vessels. However, when oxygen is largely excluded, i.e. in small headspace vessels, the presence of TPP leads to rapid gelation of the mixture within a day. Mixtures based on **formulation 1a,** which includes lower amounts of hydrophilic monomers and higher amounts of siloxanes than **formulation 2,** cannot tolerate the inclusion of TPP even when oxygen is present, i.e. in large headspace vessels.

### Effect of Tints and UV / HEVL blockers

It was observed that the nature of the tint and UV / HEVL blockers present in the mixture influenced the stability of mixtures comprising base **formulation 1a/1b.**

**Table 2. Gelation onset times with TPP and various tints / UV / HEVL blockers**

| Mix | **Base** | **Tint (parts by weight)** | **UV / HEVL blockers (parts by weight)** | **TPP (parts by weight)** | **Time to gelation** | |
|---|---|---|---|---|---|---|
| | | | | | **12.5 g formulation** | **25 g formulation** |
| 3 | 1a | RB246 (0.0082) | Norbloc (1.36) | 0.41 | <1 day | <1 day |
| 5 | 1b | RB247 (0.0135) | UV416 (0.27) Benzotriazole HEVL absorber (1.58) | 0.40 | >9 days | >4 days |

Referring to Table 2, comparing the stability of comparative mix 3 comprising base **formulation 1a** together with 0.41 parts TPP, 0.0082 parts RB246 and 1.36 parts Norbloc, and **mix 5** comprising base **formulation 1b** together with 0.40 parts TPP, 0.0135 parts RB247 and a combination of 0.27 parts benzophenone UV absorbing agent and 1.58 parts benzotriazole HEVL absorber, a significant difference in gelation onset times is observed. The fundamental difference between comparative **mix 3** and **mix 5** of the invention is the nature of the tint and UV / HEVL blockers with the mixture containing RB246 and Norbloc, exhibiting a lower stability than the mixture containing RB247 and UV416.

In all cases light was excluded from the vessels containing the mixtures. Therefore, the difference in stability is not attributable to the light transmission characteristics imparted to the mixture by the tint and UV / HEVL blockers.

### UV and HEVL blocker effects

Comparative trials using mixtures comprising base **formulation 1b** together with 0.40 parts TPP using small headspace vessels (see Table 3) were conducted to investigate the effects of the tint and UV / HEVL blockers on stability.

**Table 3. Gelation state with various tints and UV/HEVL blockers.**

| **Mix** | **Tint (parts)** | **UV blocker (parts)** | **HEVL blocker (parts)** | **Time to gelation (days)** |
|---|---|---|---|---|
| 6 | None | None | None | <0.5 |
| 7 | None | Norbloc (1.36) | None | <0.5 |
| 8 | RB246 (0.0135) | None | None | <1 |
| | | | | |
| 9 | None | None | UV13 (1.08) | <1 |
| 10 | None | None | UV28 (0.50) | <1 |
| 11 | None | UV416 (0.27) | None | <1 |
| 12 | RB247 (0.0135) | None | None | 2 |
| 13 | RB247 (0.0135) | None | UV13 (1.08) | 3 |
| 14 | RB247 (0.0135) | None | UV28 (0.50) | 3 |
| 15 | RB247 (0.0135) | UV416 (0.27) | None | 3 - 4 |
| 16 | RB247 (0.0135) | UV416 (0.27) | UV13 (1.08) | >8 |
| 17 | RB247 (0.0135) | UV416 (0.27) | UV28 (0.50) | >8 |

These results demonstrate that while the UV absorbing agent Norbloc did not delay the onset of polymerisation, each of RB246, UV416, UV13 and UV28 have a moderate stabilising effect. These results also demonstrate that the inclusion of the tint RB247 significantly delays the onset of polymerisation, with RB247 being more effective than RB246 at equivalent weight % loading. RB247 appears to have the most significant stabilising effect of all the tints and UV / HEVL blockers when used alone.

The stabilising effects were found to be synergistic, and the most improved monomer mixture stability was achieved with a combination of RB247 with UV416 and a benzotriazole HEVL absorber **(Mixes 16 and 17).**

## Claims

1. A silicone hydrogel contact lens formulation comprising:
a. at least 40% (wt/wt) of a polymerizable siloxane component;
b. at least 30% (wt/wt) of hydrophilic *N*-vinyl amide monomer(s);
c. triphenylphosphine (TPP); and
d. 1,4-bis[(2-methacryloxyethyl)amino]-9,10-anthraquinone (RB247).

2. The formulation of claim 1, further comprising:
e. a benzophenone UV-absorbing agent, especially 2-(4-benzoyl-3-hydroxyphenoxy) ethyl acrylate (UV416),
wherein (e.) the benzophenone UV-absorbing agent is optionally present in an amount of from 0.1% (wt/wt) to 3.0% (wt/wt).

3. The formulation of claim 1 or claim 2, further comprising:
f. a benzotriazole HEVL absorber
wherein (f.) the benzotriazole HEVL absorber is optionally present in an amount of from 0.1% (wt/wt) to 3.0% (wt/wt).

4. The formulation of claim 3, wherein the benzotriazole HEVL absorber includes 2-[3'-tert-butyl-2'-hydroxy-5'-(3"-methacryloyloxy propoxy)phenyl]-5-chloro-2H-benzotriazole (UV28), 2-(1,1-dimethylethyl)-4-[3-[(4-ethenyl phenyl) methoxy]propoxy]-6-(5-methoxy-2H-benzotriazol-2-yl)-phenol (UV1), 2-(5-chloro-2H-benzotriazol-2-yl)-6-(1,1-dimethylethyl)-4-ethenyl-phenol (UV5 / UVAM), 2-[2'-hydroxy-3'-tert-butyl-5'-(3"-methacryloyloxypropoxy)phenyl]-5-methoxy-2H-benzotriazole (UV13), 2-3'-*tert*-butyl-2'-hydroxy-5'-(3"-dimethylvinylsilylpropoxy)-2'-hydroxy-phenyl)-5-methoxybenzotriazole (UV15), especially 2-[2'-hydroxy-3'-*tert*-butyl-5'-(3"-methacryloyloxypropoxy)phenyl]-5-methoxy-2H-benzotriazole (UV13) or 2-[2'-hydroxy-3'-*tert-*butyl-5'-(3"-methacryloyloxypropoxy)phenyl]-5-chloro-2*H*-benzotriazole (UV28).

5. The formulation of any preceding claim, comprising N-methyl N-vinyl acetamide in an amount of from 35 to 50% (wt/wt).

6. The formulation of any preceding claim, wherein (b.) the N-vinyl amide monomer component is present in an amount of at least 37% (wt/wt).

7. The formulation of any preceding claim, further comprising:
g. at least 5% (wt/wt) of non-siloxane hydrophobic monomers, especially hydrophobic methacrylate monomers,
wherein (g.) the hydrophobic monomers optionally include hydroxybutyl methacrylate, isobornyl methacrylate or a combination of hydroxybutyl methacrylate and isobornyl methacrylate.

8. The formulation of any preceding claim, wherein (a.) the polymerizable siloxane component is present in an amount of at least 45% (wt/wt).

9. The formulation of any preceding claim, wherein (a.) the polymerizable siloxane component comprises di-functional siloxane(s) having a molecular weight of at least 8,000 daltons, optionally in an amount of from 20 to 40% (wt/wt); and /or comprises mono-functional, (meth)acrylate-containing siloxane(s) having a molecular weight of less than 3000 daltons, optionally in an amount of from 10 to 30% (wt/wt).

10. The formulation of any preceding claim, wherein at least 40% (wt/wt) of the polymerizable siloxane content is di-functional siloxanes having a molecular weight of at least 8,000 daltons, and wherein at least 25% (wt/wt) of the polymerizable siloxane content is mono-functional siloxanes having a molecular weight of less than 3000 daltons.

11. The formulation of any preceding claim, wherein (c.) triphenylphosphine (TPP) is present in an amount of from 0.1 to 2% (wt/wt).

12. The formulation of claim 1, comprising:
a1. di-functional siloxanes having a molecular weight of at least 8,000 daltons in an amount of from 20 to 40% (wt/wt);
a2. mono-functional, (meth)acrylate-containing siloxanes having a molecular weight of less than 3000 daltons in an amount of from 10 to 30 (wt/wt);
b. *N*-methyl *N*-vinyl acetamide in an amount of from 37 to 50% (wt/wt);
c. at least 0.2% (wt/wt) TPP;
d. at least 0.005% (wt/wt) RB247;
e. a benzophenone UV-absorbing agent in an amount of at least 0.1% (wt/wt);
f. a benzotriazole HEVL absorber in an amount of at least 0.1% (wt/wt); and
g. at least 5% (wt/wt) of non-siloxane hydrophobic methacrylate monomers, including hydroxybutyl methacrylate, isobornyl methacrylate or a combination of hydroxybutyl methacrylate and isobornyl methacrylate.

13. The formulation of any preceding claim, wherein the polymerizable siloxane component includes:
(i) a di-functional siloxane monomer represented by formula (III), 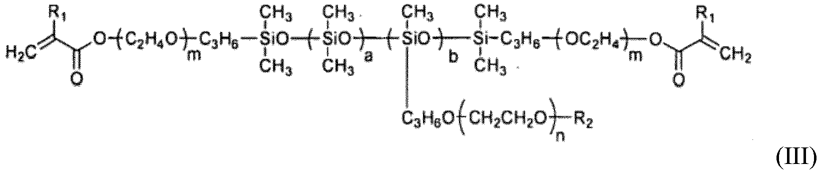 wherein R₁ is selected from either hydrogen or a methyl group; R₂ is selected from either hydrogen or a C₁₋₄ hydrocarbon group; m represents an integer of from 0 to 10; n represents an integer of from 4 up to about 15, 25, or 100; a and b represent integers of 1 or more; a+b is equal to 20-500; b/(a+b) is equal to 0.01-0.22; and the configuration of siloxane units includes a random configuration; and/or
(ii) a mono-functional methacrylate-containing siloxane monomer represented by formula (II), 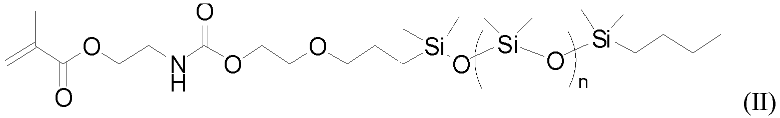 where n is an integer from about 10 to 15.

14. The formulation of any preceding claim, which is a thermally cured formulation that further comprises:
h. at least one thermal radical initiator.

15. A silicone hydrogel contact lens obtained from the polymerisation of the formulation of any preceding claim.

## Patentansprüche

1. Silikon-Hydrogel-Kontaktlinsenformulierung, umfassend:
a. mindestens 40 % (Gew./Gew.) einer polymerisierbaren Siloxankomponente;
b. mindestens 30 % (Gew./Gew.) eines oder mehrerer hydrophiler N-Vinylamid-Monomere;
c. Triphenylphosphin (TPP); und
d. 1,4-Bis[(2-methacryloxyethyl)amino]-9,10-anthrachinon (RB247).

2. Formulierung nach Anspruch 1, die ferner umfasst:
e. Benzophenon-UV-Absorptionsmittel, insbesondere 2-(4-Benzoyl-3-hydroxyphenoxy)ethylacrylat (UV416),
wobei (e.) das Benzophenon-UV-Absorptionsmittel optional in einer Menge von 0,1 % (Gew./Gew.) bis 3,0 % (Gew./Gew.) vorhanden ist.

3. Formulierung nach Anspruch 1 oder Anspruch 2, die ferner umfasst:
f. einen Benzotriazol-HEVL-Absorber
wobei (f.) der Benzotriazol-HEVL-Absorber optional in einer Menge von 0,1 % (Gew./Gew.) bis 3,0 % (Gew./Gew.) vorhanden ist.

4. Formulierung nach Anspruch 3, wobei der Benzotriazol-HEVL-Absorber 2-[3'-tert-Butyl-2'-hydroxy-5'-(3"-methacryloxypropoxy)phenyl]-5-chlor-2*H*-benzotriazol (UV28), 2-(1,1-Dimethylethyl)-4-[3-[(4-ethenylphenyl)methoxy]propoxy] -6-(5-methoxy-2*H-*benzotriazol-2-yl)-phenol (UV1), 2-(5-chlor-2H-benzotriazol-2-yl)-6-(1,1-dimethylethyl)-4-ethenylphenol (UV5 / UVAM), 2-[2'-Hydroxy-3'-*tert*-butyl-5'-(3"-methacryloyloxypropoxy)phenyl]-5-methoxy-2H-benzotriazol (UV13), 2-3'-*tert*-Butyl-2'-hydroxy-5'-(3"-dimethylvinylsilylpropoxy)-2'-hydroxy-phenyl)-5-methoxybenzotriazol (UV15), insbesondere 2-[2'-Hydroxy-3'-tert-butyl-5'-(3"-methacryloyloxypropoxy)phenyl]-5-methoxy-2H-benzotriazol (UV13) oder 2-[2'-Hydroxy-3'-tert-butyl-5'-(3"-methacryloyloxypropoxy)phenyl]-5-chlor-2H-benzotriazol (UV28) umfasst.

5. Formulierung nach einem der vorstehenden Ansprüche, umfassend N-Methyl-N-vinylacetamid in einer Menge von 35 bis 50 % (Gew./Gew.).

6. Formulierung nach einem der vorstehenden Ansprüche, wobei (b.) die N-Vinylamid-Monomerkomponente in einer Menge von mindestens 37 % (Gew./Gew.) vorhanden ist.

7. Formulierung nach einem der vorstehenden Ansprüche, die ferner umfasst:
g. mindestens 5 % (Gew./Gew.) nicht-siloxanhaltige hydrophobe Monomere, insbesondere hydrophobe Methacrylatmonomere,
wobei (g.) die hydrophoben Monomere optional Hydroxybutylmethacrylat, Isobornylmethacrylat oder eine Kombination aus Hydroxybutylmethacrylat und Isobornylmethacrylat umfassen.

8. Formulierung nach einem der vorstehenden Ansprüche, wobei (a.) die polymerisierbare Siloxankomponente in einer Menge von mindestens 45 % (Gew./Gew.) vorhanden ist.

9. Formulierung nach einem der vorstehenden Ansprüche, wobei (a.) die polymerisierbare Siloxankomponente difunktionelle(s) Siloxan(e) mit einem Molekulargewicht von mindestens 8.000 Dalton umfasst, optional in einer Menge von 20 bis 40 % (Gew./Gew.); und/oder monofunktionelles(s), (Meth)acrylat-haltiges(s) Siloxan(e) mit einem Molekulargewicht von weniger als 3.000 Dalton, optional in einer Menge von 10 bis 30 % (Gew./Gew.) umfasst.

10. Formulierung nach einem der vorstehenden Ansprüche, wobei mindestens 40 % (Gew./Gew.) des polymerisierbaren Siloxangehalts difunktionelle Siloxane mit einem Molekulargewicht von mindestens 8.000 Dalton sind, und wobei mindestens 25 % (Gew./Gew.) des polymerisierbaren Siloxangehalts monofunktionelle Siloxane mit einem Molekulargewicht von weniger als 3.000 Dalton sind.

11. Formulierung nach einem der vorstehenden Ansprüche, wobei (c.) Triphenylphosphin (TPP) in einer Menge von 0,1 bis 2 % (Gew./Gew.) vorhanden ist.

12. Formulierung nach Anspruch 1, umfassend:
al. difunktionelle Siloxane mit einem Molekulargewicht von mindestens 8.000 Dalton in einer Menge von 20 bis 40 % (Gew./Gew.);
a2. monofunktionelle, (Meth)acrylat-haltige Siloxane mit einem Molekulargewicht von weniger als 3.000 Dalton in einer Menge von 10 bis 30 (Gew./Gew.);
b. *N*-Methyl-*N*-vinylacetamid in einer Menge von 37 bis 50 % (Gew./Gew.);
c. mindestens 0,2 % (Gew./Gew.) TPP;
d. mindestens 0,005 % (Gew./Gew.) RB247;
e. ein Benzophenon-UV-Absorptionsmittel in einer Menge von mindestens 0,1 % (Gew./Gew.);
f. Benzotriazol-HEVL-Absorber in einer Menge von mindestens 0,1 % (Gew./Gew.); und
g. mindestens 5 % (Gew./Gew.) nicht-siloxanhaltige hydrophobe Methacrylatmonomere, einschließlich Hydroxybutylmethacrylat, Isobornylmethacrylat oder eine Kombination aus Hydroxybutylmethacrylat und Isobornylmethacrylat.

13. Formulierung nach einem der vorstehenden Ansprüche, wobei die polymerisierbare Siloxankomponente umfasst:
(i) ein difunktionelles Siloxanmonomer, dargestellt durch die Formel (III), 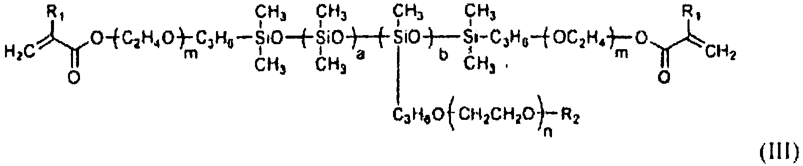 wobei R₁ entweder aus Wasserstoff oder einer Methylgruppe ausgewählt ist; R₂ entweder aus Wasserstoff oder einer C₁₋₄-Kohlenwasserstoffgruppe ausgewählt ist; m eine ganze Zahl von 0 bis 10 darstellt; n eine ganze Zahl von 4 bis etwa 15, 25 oder 100 darstellt; a und b ganze Zahlen von 1 oder mehr darstellen; a+b gleich 20-500 ist; b/(a+b) gleich 0,01-0,22 ist; und die Konfiguration der Siloxaneinheiten eine zufällige Konfiguration umfasst,
und/oder
(ii) ein monofunktionelles Methacrylat-haltiges Siloxanmonomer dargestellt durch die Formel (II), 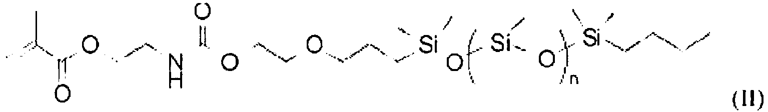 wobei n eine ganze Zahl von etwa 10 bis 15 ist.

14. Formulierung nach einem der vorstehenden Ansprüche,
bei der es sich um eine thermisch gehärtete Formulierung handelt, die ferner umfasst: h. mindestens einen thermischen Radikalinitiator.

15. Silokonhydrogel-Kontaktlinse, die durch Polymerisation der Formulierung nach einem der vorstehenden Ansprüche erhalten wird.

## Revendications

1. Formulation pour lentilles de contact en silicone hydrogel contenant :
a. au moins 40 % en poids d'un composant siloxane polymérisable ;
b. au moins 30 % en poids d'un ou plusieurs monomères N-vinyl amide hydrophiles ;
c. de la triphénylphosphine (TPP) ; et
d. de la 1,4-bis[(2-méthacryloxyéthyl)amino]-9,10-anthraquinone (RB247).

2. Formulation selon la revendication 1, comprenant en outre :
e. un agent benzophénone absorbeur d'UV, en particulier de l'acrylate de 2-(4-benzoyl-3-hydroxyphénoxy)éthyle (UV416),
dans laquelle (e.) l'agent benzophénone absorbeur d'UV est facultativement présent à hauteur de 0,1 % en poids à 3,0 % en poids.

3. Formulation selon la revendication 1 ou la revendication 2, comprenant en outre :
f. un absorbeur de lumière HEV benzotriazole
dans laquelle (f.) l'absorbeur de lumière HEV benzotriazole est facultativement présent à hauteur de 0,1 % en poids à 3,0 % en poids.

4. Formulation selon la revendication 3, dans laquelle l'absorbeur de lumière HEV benzotriazole inclut de la 2-[3'-tert-butyl-2'-hydroxy-5'-(3"-méthacryloyloxy propoxy)phényl ]-5-chloro-2H-benzotriazole (UV28), du 2-(1,1-diméthyléthyl)-4-[3-[(4-éthényl phényl) méthoxy]propoxy]-6-(5-méthoxy-2H-benzotriazol-2-yl)-phénol (UV1), du 2-(5-chloro-2H-benzotriazol-2-yl)-6-(1,1-diméthyléthyl)-4-éthényl-phénol (UV5 / UVAM), de la 2-[2'-hydroxy-3'-tert-butyl-5'-(3"-méthacryloyloxypropoxy)phényl]-5-méthoxy-2H-benzotriazole (UV13), de la 2-3'-tert-butyl-2'-hydroxy-5'-(3"-diméthylvinylsilylpropoxy)-2'-hydroxy-phényl)-5-méthoxybenzotriazole (UV15), en particulier de la 2-[2'-hydroxy-3'-tert-butyl-5'-(3"-méthacryloyloxypropoxy)phényl]-5-méthoxy-2H-benzotriazole (UV13) ou de la 2-[2'-hydroxy-3'-tert-butyl-5'-(3"-méthacryloyloxy propoxy)phényl]-5-chloro-2H-benzotriazole (UV28).

5. Formulation selon l'une quelconque des revendications précédentes, contenant du N-méthyl N-vinyl acétamide à hauteur de 35 à 50 % en poids.

6. Formulation selon l'une quelconque des revendications précédentes, dans laquelle (b.) le composant monomère N-vinyl amide est présent à hauteur d'au moins 37 % en poids.

7. Formulation selon l'une quelconque des revendications précédentes, comprenant en outre :
g. au moins 5 % en poids de monomères hydrophobes non siloxanes, en particulier de monomères hydrophobes méthacrylates.
dans laquelle (g.) les monomères hydrophobes incluent facultativement du méthacrylate d'hydroxybutyle, du méthacrylate d'isobornyle ou une combinaison de méthacrylate d'hydroxybutyle et de méthacrylate d'isobornyle.

8. Formulation selon l'une quelconque des revendications précédentes, dans laquelle (a.) le composant siloxane polymérisable est présent à hauteur d'au moins 45 % en poids.

9. Formulation selon l'une quelconque des revendications précédentes, dans laquelle (a.) le composant siloxane polymérisable comprend un ou plusieurs siloxanes difonctionnels ayant un poids moléculaire d'au moins 8000 daltons, facultativement à hauteur de 20 à 40 % en poids, et/ou comprend un ou plusieurs siloxanes monofonctionnels contenant du (méth)acrylate ayant un poids moléculaire d'au plus 3000 daltons, facultativement à hauteur de 10 à 30 % en poids.

10. Formulation selon l'une quelconque des revendications précédentes, dans laquelle au moins 40 % en poids de la teneur en siloxane polymérisable sont constitués de siloxanes difonctionnels ayant un poids moléculaire d'au moins 8000 daltons, et dans laquelle au moins 25 % en poids de la teneur en siloxane polymérisable sont constitués de siloxanes monofonctionnels ayant un poids moléculaire d'au plus 3000 daltons.

11. Formulation selon l'une quelconque des revendications précédentes, dans laquelle (c.) de la triphénylphosphine (TPP) est présente à hauteur de 0,1 à 2 % en poids.

12. Formulation selon la revendication 1, comprenant :
a1. des siloxanes difonctionnels ayant un poids moléculaire d'au moins 8000 daltons à hauteur de 20 à 40 % en poids ;
a2. des siloxanes monofonctionnels contenant du (méth)acrylate ayant un poids moléculaire d'au plus 3000 daltons à hauteur de 10 à 30 % en poids ;
b. du N-méthyl N-vinyl acétamide à hauteur de 37 à 50 % en poids ;
c. au moins 0,2 % en poids de TPP ;
d. au moins 0,005 % en poids de RB247 ;
e. un agent benzophénone absorbeur d'UV à hauteur d'au moins 0,1 % en poids ;
f. un absorbeur de lumière HEV benzotriazole à hauteur d'au moins 0,1 % en poids ; et
g. au moins 5 % en poids de monomères méthacrylates hydrophobes non siloxanes, dont du méthacrylate d'hydroxybutyle, du méthacrylate d'isobornyle ou une combinaison de méthacrylate d'hydroxybutyle et de méthacrylate d'isobornyle.

13. Formulation selon l'une quelconque des revendications précédentes, dans laquelle le composant siloxane polymérisable comprend :
(i) un monomère siloxane difonctionnel représenté par la formule (III), 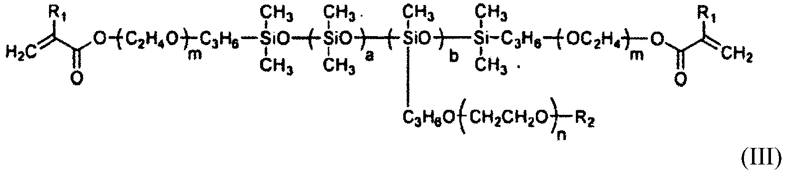 où R₁ est choisi entre hydrogène et un groupe méthyle ; R₂ est choisi entre hydrogène ou un groupe hydrocarbure C₁₋₄ ; m représente un entier de 0 à 10 ; n représente un entier de 4 à environ 15, 25, ou 100 ; a et b représentent des entiers au moins égal à 1 ; a+b est égal à 20-500 ; b/(a+b) est égal à 0,01-0,22 ; et la configuration d'unités siloxane inclut une configuration aléatoire ; et/ou
(ii) un monomère siloxane monofonctionnel contenant du méthacrylate représenté par la formule (II), 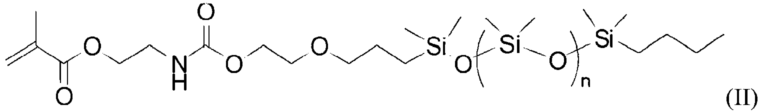 où n est un entier entre environ 10 et 15.

14. Formulation selon l'une quelconque des revendications précédentes, qui est une formulation thermiquement polymérisée qui comprend en outre :
h. au moins un initiateur radicalaire thermique.

15. Lentille de contact en silicone hydrogel obtenue par la polymérisation de la formulation selon l'une quelconque des revendications précédentes.
